# EUROPEAN PATENT APPLICATION

(11) **EP 4 607 739 A1**
(43) Date of publication of application: **27.08.2025**
(21) Application number: 23878596.8
(22) Date of filing: 26.04.2023
(51) Int. Cl.: H02J 3/46, H02J 13/00, H02S 50/00

(54) **PHOTOVOLTAIC DEVICE GROUPING METHOD, MANAGEMENT MODULE, PHOTOVOLTAIC DEVICE, SYSTEM, AND MEDIUM**

(30) Priority: 19.10.2022 CN 202211279826
(71) Applicant: Hoymiles Power Electronics Inc., Hangzhou, Zhejiang 310015 (CN)
(72) Inventor: YU, Hongbin, Hangzhou, Zhejiang 310015 (CN); ZHOU, Shigao, Hangzhou, Zhejiang 310015 (CN); WU, Yanwei, Hangzhou, Zhejiang 310015 (CN); RONG, Qiang, Hangzhou, Zhejiang 310015 (CN); ZHAO, Yi, Hangzhou, Zhejiang 310015 (CN); YANG, Bo, Hangzhou, Zhejiang 310015 (CN)
(74) Representative: Meyer-Dulheuer MD Legal Patentanwälte PartG mbB
(86) International application number: PCT/CN2023/090777
(87) International publication number: WO 2024/082596

(57) **Abstract**

A photovoltaic device grouping method, a management module, a photovoltaic device, a system, and a storage medium are provided. The method includes: determining a first photovoltaic device among a plurality of photovoltaic devices in each of photovoltaic strings based on communication with the photovoltaic devices, the first photovoltaic device being configured for determining a second photovoltaic device which is located at the same photovoltaic string as the first photovoltaic device, and grouping the photovoltaic devices based on grouping information of each second photovoltaic device. The grouping information is determined by the second photovoltaic device according to a response signal, which is sent by the first photovoltaic device during a process of each first photovoltaic device communicating with a management module.

## Description

### CROSS-REFERENCE TO RELATED APPLICATION

This application claims priority to Chinese patent application No. 202211279826.7, filed on October 19, 2022, titled "PHOTOVOLTAIC DEVICE GROUPING METHOD, MANAGEMENT MODULE, PHOTOVOLTAIC DEVICE, SYSTEM, AND MEDIUM", the content of which is hereby incorporated herein in its entirety by reference.

### TECHNICAL FIELD

The present invention generally relates to the field of photovoltaic power generation technology, and in particular, to a photovoltaic device grouping method, a management module, a photovoltaic device, a system, and a storage medium.

### BACKGROUND

With development of photovoltaic power generation technology, MLPE (module level power electronics) photovoltaic devices are widely applied in photovoltaic systems. The MLPE photovoltaic devices can be configured to perform a maximum power point tracing, a rapid shutdown operation, a data collection and monitoring, or the like on a photovoltaic module.

Generally, one or more photovoltaic modules are configured with one MLPE photovoltaic device. Therefore, there is a relatively large quantity of MLPE photovoltaic devices in the photovoltaic system. To accurately obtain information of each photovoltaic module and facilitate later maintenance, or the like, it is necessary to clearly know location information of each photovoltaic device, including the information about which photovoltaic string each MLPE photovoltaic device belongs to.

In the related art, the grouping of the MLPE photovoltaic devices in the photovoltaic systems is generally determined manually. Apparently, the process of determining group information manually of the MLPE photovoltaic devices is too complex, taking too much time, and is prone to errors, increasing labor costs.

### SUMMARY

According to various embodiments of the present invention, a photovoltaic device grouping method, a management module, a photovoltaic device, a system, and a storage medium are provided.

In a first aspect, a photovoltaic device grouping method is provided and applied to a management module in a photovoltaic system. The photovoltaic system further includes a plurality of photovoltaic strings, each of which includes a plurality of photovoltaic devices connected in series and a plurality of photovoltaic modules connected to the plurality of photovoltaic devices respectively, and the method includes: determining a first photovoltaic device among the plurality of photovoltaic devices in each of the plurality of photovoltaic strings based on communication with the plurality of photovoltaic devices, and the first photovoltaic device being configured for determining a second photovoltaic device which is located at the same photovoltaic string as the first photovoltaic device, and grouping the plurality of photovoltaic devices based on grouping information of the second photovoltaic device. The grouping information is determined by the second photovoltaic device according to a response signal, which is sent by the first photovoltaic device during a process of the first photovoltaic device communicating with the management module.

In an embodiment, determining the first photovoltaic device among the plurality of photovoltaic devices in each of the plurality of photovoltaic strings based on communication with the plurality of photovoltaic devices further includes: sending a first signal instruction to the plurality of photovoltaic devices, receiving a first response signal sent by a photovoltaic device in response to the first signal instruction, and determining the first photovoltaic device among the plurality of photovoltaic devices in a photovoltaic string based on the first response signal. The first response signal includes device information of a corresponding photovoltaic device.

In an embodiment, determining the first photovoltaic device among the plurality of photovoltaic devices in each of the plurality of photovoltaic strings based on communication with the plurality of photovoltaic devices further includes: sending a second signal instruction to the plurality of photovoltaic devices. The second signal instruction includes a signal threshold, and the signal threshold is configured to determine the second photovoltaic device which is located at the same photovoltaic string as a corresponding first photovoltaic device and the grouping information of the second photovoltaic device.

In an embodiment, grouping the plurality of photovoltaic devices based on grouping information of the second photovoltaic device further includes: sending a third signal instruction to the second photovoltaic device, and receiving a third response signal sent by a second photovoltaic device in response to the third signal instruction. The third response signal includes either or both of the grouping information and identification information of a corresponding second photovoltaic device.

In an embodiment, the method further includes: sending a fourth signal instruction to the plurality of photovoltaic devices, wherein the fourth signal instruction is configured to notify that the second photovoltaic device has been registered.

In an embodiment, the first signal instruction includes a state acquiring instruction which includes identification information of a photovoltaic device, the photovoltaic device corresponding to the identification information sends the first response signal, the device information of the corresponding photovoltaic device includes a status identifier of the corresponding photovoltaic device, and the status identifier is configured to identify whether the corresponding photovoltaic device is a second photovoltaic device. Determining the first photovoltaic device among the plurality of photovoltaic devices in the photovoltaic string based on the first response signal further includes: determining whether the corresponding photovoltaic device is a second photovoltaic device according to the status identifier in the first response signal, and if no, further determining the corresponding photovoltaic device is a first photovoltaic device.

In an embodiment, the first signal instruction includes a search instruction for the first photovoltaic device, a photovoltaic device that successfully responds to the search instruction for the first photovoltaic device sends the first response signal and is determined to be the first photovoltaic device based on the first response signal, and the device information of the corresponding photovoltaic device includes identification information of the corresponding photovoltaic device.

In an embodiment, the grouping information is determined by the second photovoltaic device according to a signal characteristic of the first response signal and a corresponding signal threshold.

In an embodiment, the signal characteristic of the first response signal includes at least one of signal amplitude, signal impedance, or signal attenuation.

In an embodiment, the grouping information is determined by the second photovoltaic device according to a maximum difference in an order of differences between signal amplitudes of first response signals and corresponding signal thresholds.

In an embodiment, the method further includes: when the second photovoltaic device receives the second signal instruction and determines that identification information of a photovoltaic device carried in the received first response signal is consistent with identification information of a photovoltaic device carried in the second signal instruction, generating the grouping information.

In an embodiment, the method further includes: sending the second signal instruction to the plurality of photovoltaic devices repeatedly. The grouping information is determined by the second photovoltaic device according to a signal characteristic of a second response signal and a signal threshold corresponding to the second response signal, and the second response signal is sent by the first photovoltaic device in response to the second signal instruction.

In an embodiment, the third signal instruction includes a reporting instruction for the grouping information, and the reporting instruction for the grouping information includes identification information of a specified second photovoltaic device and is configured to instruct the specified second photovoltaic device to report the grouping information of the specified second photovoltaic device.

In an embodiment, the third signal instruction includes a search instruction for the second photovoltaic device, and a second photovoltaic device that successfully responds to the search instruction for the second photovoltaic device reports either or both of the grouping information thereof and the identification information thereof.

In a second aspect, a management module applied to a photovoltaic system is provided in an embodiment of the present invention. The photovoltaic system further includes a plurality of photovoltaic strings, each of which includes a plurality of photovoltaic devices connected in series and a plurality of photovoltaic modules connected to the plurality of photovoltaic devices respectively. The management module includes a first determining module and a grouping module. The first determining module is configured for determining a first photovoltaic device among the plurality of photovoltaic devices in each of the plurality of photovoltaic strings based on communication with the plurality of photovoltaic devices. The first photovoltaic device is configured for determining a second photovoltaic device which is located at the same photovoltaic string as the first photovoltaic device. The grouping module is configured for grouping the plurality of photovoltaic devices based on grouping information of the second photovoltaic device. The grouping information is determined by the second photovoltaic device according to a response signal, which is sent by the first photovoltaic device during a process of the first photovoltaic device communicating with the management module.

In a third aspect, a photovoltaic device grouping method applied to a photovoltaic device in a photovoltaic system is provided in an embodiment of the present invention. The photovoltaic system includes a plurality of photovoltaic strings and a management module, and each of the plurality of photovoltaic strings includes a plurality of photovoltaic devices connected in series and a plurality of photovoltaic modules connected to the plurality of photovoltaic devices respectively. The method includes: the plurality of photovoltaic devices communicating with the management module respectively, to determine a first photovoltaic device among the plurality of photovoltaic devices in each of the plurality of photovoltaic strings, and the second photovoltaic device generating grouping information thereof according to a response signal. The first photovoltaic device is configured for determining a second photovoltaic device which is located at the same photovoltaic string as the first photovoltaic device, the response signal is sent by the first photovoltaic device during a process of the first photovoltaic device communicating with the management module, and the grouping information is configured for grouping the plurality of photovoltaic devices.

In an embodiment, the plurality of photovoltaic devices communicating with the management module respectively, to determine a first photovoltaic device among the plurality of photovoltaic devices in each of the plurality of photovoltaic strings further includes: the plurality of photovoltaic devices receiving a first signal instruction sent by the management module, and a photovoltaic device in response to the first signal instruction sending a first response signal to the management module. The first response signal is configured for determining the first photovoltaic device among the plurality of photovoltaic device in a photovoltaic string, and the first response signal includes device information of a corresponding photovoltaic device.

In an embodiment, the plurality of photovoltaic devices communicating with the management module respectively, to determine a first photovoltaic device among the plurality of photovoltaic devices in each of the plurality of photovoltaic strings further includes: the plurality of photovoltaic devices receiving a second signal instruction sent by the management module. The second signal instruction includes a signal threshold, and the signal threshold is configured to determine a second photovoltaic device which is located at the same photovoltaic string as a corresponding first photovoltaic device and the grouping information of the second photovoltaic device.

In an embodiment, the method further includes: determining a second photovoltaic device based on a signal characteristic of the first response signal and a corresponding signal threshold.

In an embodiment, the method further includes: the plurality of photovoltaic devices receiving a third signal instruction sent by the management module, and a second photovoltaic device in response to the third signal instruction sending a third response signal to the management module. The third response signal includes either or both of the grouping information and identification information of the second photovoltaic device.

In an embodiment, the first signal instruction includes a state acquiring instruction which includes identification information of a photovoltaic device, the photovoltaic device corresponding to the identification information sends the first response signal, the device information of the corresponding photovoltaic device includes a status identifier of the corresponding photovoltaic device, and the status identifier is configured to identify whether the corresponding photovoltaic device is a second photovoltaic device.

In an embodiment, the first signal instruction includes a search instruction for the first photovoltaic device, a photovoltaic device that successfully responds to the search instruction for the first photovoltaic device sends the first response signal, and the device information of the corresponding photovoltaic device includes identification information of the corresponding photovoltaic device.

In an embodiment, the grouping information is determined by the second photovoltaic device according to a signal characteristic of the first response signal and a corresponding signal threshold.

In an embodiment, the signal characteristic of the first response signal includes at least one of signal amplitude, signal impedance, or signal attenuation.

In an embodiment, the grouping information is determined by the second photovoltaic device according to a maximum difference in an order of differences between the signal amplitudes of the first response signals and the corresponding signal thresholds.

In an embodiment, the method further includes: when the second photovoltaic device receives the second signal instruction and determines that identification information of a photovoltaic device carried in the received first response signal is consistent with identification information of a photovoltaic device carried in the second signal instruction, generating the grouping information.

In an embodiment, when the second photovoltaic device does not receive the first signal instruction and receives a plurality of second signal instructions, the grouping information is determined by the second photovoltaic device according to signal characteristics of the plurality of second signal instructions and corresponding signal thresholds.

In an embodiment, the third signal instruction includes a reporting instruction for the grouping information, the reporting instruction for the grouping information includes identification information of a specified second photovoltaic device to instruct the specified second photovoltaic device to report the grouping information thereof.

In an embodiment, the third signal instruction includes a search instruction for the second photovoltaic device, and a second photovoltaic device that successfully responds to the search instruction for the second photovoltaic device reports either or both of the grouping information thereof and the identification information thereof.

In a fourth aspect, a photovoltaic device applied to a photovoltaic system is provided in an embodiment of the present invention. The photovoltaic system includes a plurality of photovoltaic strings and a management module, and each of the plurality of photovoltaic strings includes a plurality of photovoltaic devices connected in series and a plurality of photovoltaic modules connected to the plurality of photovoltaic devices respectively. The photovoltaic device includes a second determining module and a third determining module. The second determining module is configured for communication between the photovoltaic device and the management module, to determine a first photovoltaic device among the plurality of photovoltaic devices in each of the plurality of photovoltaic strings, and the first photovoltaic device is configured for determining a second photovoltaic device which is located at the same photovoltaic string as the first photovoltaic device. The third determining module is configured for determining grouping information of the second photovoltaic device according to a response signal, which is sent by the first photovoltaic device during a process of the first photovoltaic device communicating with the management module. The grouping information is configured for grouping the plurality of photovoltaic devices.

In a fifth aspect, a photovoltaic system is provided in an embodiment of the present invention, including a plurality of photovoltaic strings and the management module in the second aspect. Each of the plurality of photovoltaic strings includes a plurality of photovoltaic devices in the fourth aspect and a plurality of photovoltaic modules connected to the plurality of photovoltaic devices respectively.

In a sixth aspect, a computer-readable storage medium is provided in an embodiment of the present invention. The computer-readable storage medium stores a computer program, and the computer program is executed by a processor to perform the method in the first or third aspect.

Details of one or more embodiments of the present invention are proposed in the following accompanying drawings and descriptions, so that other features, objects, and advantages of the present invention are more easily understood.

### BRIEF DESCRIPTION OF THE DRAWINGS

In order to more clearly describe technical solutions in the embodiments or the related art, the following briefly describes the accompanying drawings for describing the embodiments or the conventional technologies. Apparently, the accompanying drawings in the following description show merely the embodiments of the present invention, and one skilled in the art may still derive other drawings from the disclosed accompanying drawings without creative efforts.
FIG. 1 is a schematic diagram of a photovoltaic system in an embodiment.
FIG. 2 is a schematic diagram of a photovoltaic system in another embodiment.
FIG. 3 is a flowchart of a photovoltaic device grouping method in an embodiment.
FIG. 4 is a flowchart of a determining method of a first photovoltaic device in an embodiment.
FIG. 5 is a specifical flowchart of a determining method of a first photovoltaic device in an embodiment.
FIG. 6 is a specifical flowchart of a determining method of a first photovoltaic device in another embodiment.
FIG. 7 is a specifical flowchart of a determining method of a first photovoltaic device in another embodiment.
FIG. 8 is a specifical flowchart of a photovoltaic device grouping method in an embodiment.
FIG. 9 is a specifical flowchart of a photovoltaic device grouping method in another embodiment.
FIG. 10 is an overall flowchart of a photovoltaic device grouping method in an embodiment.
FIG. 11 is an overall flowchart of a determining method of a first photovoltaic device and a second photovoltaic device in another embodiment.
FIG. 12 is an overall flowchart of a photovoltaic device grouping method in another embodiment.
FIG. 13 is a schematic diagram of a management module in an embodiment.
FIG. 14 is a flowchart of a photovoltaic device grouping method in another embodiment.
FIG. 15 is a schematic diagram of a photovoltaic device in an embodiment.
FIG. 16 is a schematic diagram of a computer device in an embodiment.

### DETAILED DESCRIPTION OF THE EMBODIMENT

In order to more clearly illustrate technical solutions of embodiments of the present invention, a brief introduction will be given below to the accompanying drawings required for the description of the embodiments. It is obvious that the drawings described below are only some examples or embodiments of the present invention. For one skilled in the art, the present invention may be applied to other similar scenarios based on these drawings without creative labor. Unless it is obvious from the language environment or otherwise specified, the same label in the figure represents the same structure or operation.

As shown in the present invention and claims, unless the context clearly indicates an exception, words such as "one", "a", "a kind of", and/or "the" do not specifically refer to singular, but may also include plural. Generally speaking, terms "include" and "contain" only indicate steps and elements that have been clearly identified are included, and these steps and elements do not constitute an exclusive list. Methods or devices may also contain other steps or elements.

Although various references are made to certain modules in a system according to embodiments of the present invention, any number of different modules may be used and run on computing devices and/or processors. The modules are only illustrative, and different aspects of the system and method may use different modules.

When a unit or a module is described as "connecting" or "coupling" with other units, modules, or blocks, it may refer to direct connection or coupling, or communication with other units, modules, or blocks, or there may be intermediate units, modules, or blocks, unless otherwise specified in the context. The term "and/or" used in this article may include any and all combinations of one or more related listed items.

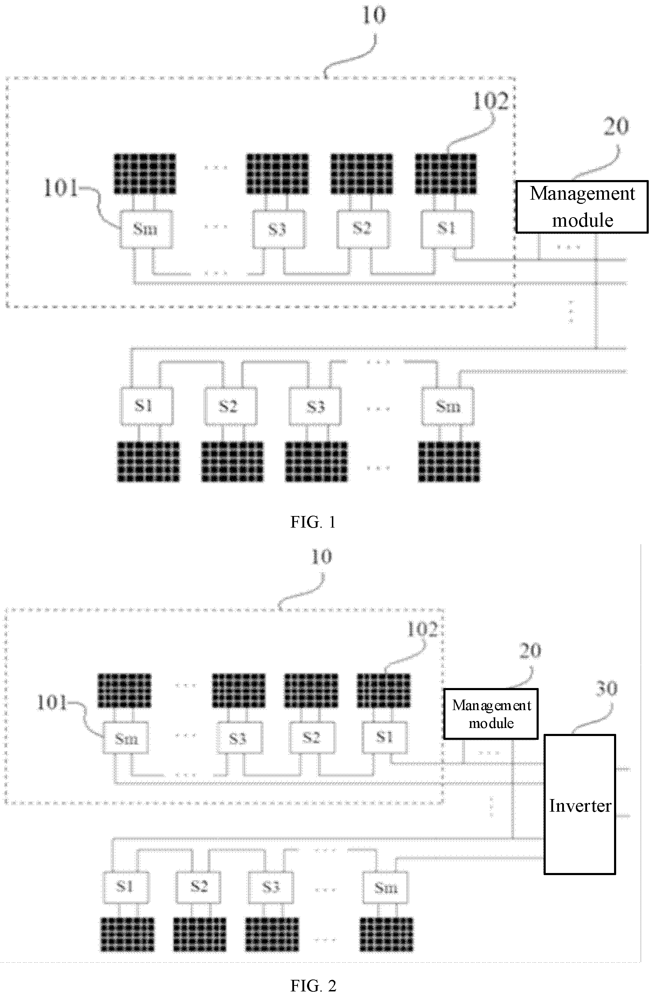

FIG. 1 is a schematic diagram of a photovoltaic system in an embodiment of the present invention. The photovoltaic system includes a plurality of photovoltaic strings 10 and a management module 20. Each of the plurality of photovoltaic strings 10 includes a plurality of photovoltaic devices 101 (i.e., S1 to Sm in FIG. 1) connected in series and a plurality of photovoltaic modules 102 connected to the plurality of photovoltaic devices 101, respectively. The plurality of photovoltaic modules 102 are configured to provide direct current. The management module 20 is configured to communicate with each of the plurality of photovoltaic devices 10 and group the plurality of photovoltaic devices 101.

In particular, the plurality of photovoltaic devices 101 may include shutdown devices, optimizers, micro-inverters, monitors, and so on. The management module 20 communicates with each of the plurality of photovoltaic devices 101, for example, by power line carrier.

FIG. 2 is a schematic diagram of the photovoltaic system in another embodiment of the present invention. The photovoltaic system includes an inverter 30, a plurality of photovoltaic strings 10 connected to the inverter 30, and a management module 20. Each of the plurality of the photovoltaic strings 10 includes a plurality of photovoltaic devices 101 (i.e., S1 to Sm in FIG. 1) connected to each other in series and a plurality of photovoltaic modules 102 connected to the plurality of photovoltaic devices 101, respectively. The inverter 30 is configured to convert direct current provided by the plurality of photovoltaic modules 102 into alternating current. The management module 20 communicates with each of the plurality of photovoltaic devices 101, for example, by the power line carrier.

The plurality of the photovoltaic devices 101 may include the shutdown devices, the optimizers, the monitors, and so on. The plurality of photovoltaic devices 101 which are located at the same photovoltaic string are connected in series. The plurality of photovoltaic strings are connected to a plurality of direct-current input ports of the inverter 30, respectively. The management module 20 communicates with each of the plurality of photovoltaic devices 101, for example, by the power line carrier.

The management module 20 is configured for communicating with the plurality of photovoltaic devices 101 and grouping the plurality of photovoltaic devices 101.

In an embodiment, the management module 20 may be integrated in the inverter 30.

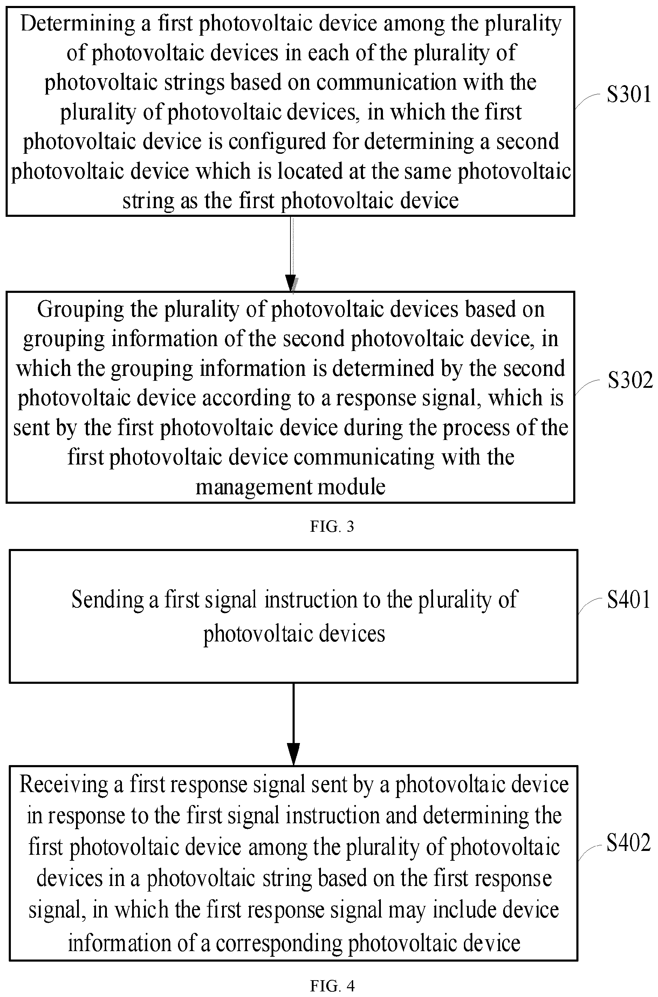

In an embodiment, referring to FIG. 3, a photovoltaic device grouping method is provided, this method applied to the management module in the photovoltaic system in FIG. 1 or FIG. 2 is taken as an example for explanation, including following step 301 and step 302.

Step 301 includes determining a first photovoltaic device among the plurality of photovoltaic devices in each of the plurality of photovoltaic strings based on communication with the plurality of photovoltaic devices, in which the first photovoltaic device is configured for determining a second photovoltaic device which is located at the same photovoltaic string as the first photovoltaic device.

The first photovoltaic device may be any one of the plurality of photovoltaic devices in each of the plurality of photovoltaic strings, for example, be a photovoltaic device of one of the plurality of photovoltaic strings first communicating with the management module. The second photovoltaic device may be a photovoltaic device with grouping information and not the first photovoltaic device.

The second photovoltaic device may generate the grouping information according to a signal characteristic of a response signal, which is sent by a first photovoltaic device during the process of the first photovoltaic device communicating with the management module, during the process of the management module communicating with each of the plurality of first photovoltaic devices.

The signal characteristic of the response signal may include at least one of signal amplitude, signal impedance, or signal attenuation.

Step 302 includes grouping the plurality of photovoltaic devices based on grouping information of the second photovoltaic device, in which the grouping information is determined by the second photovoltaic device according to a response signal, which is sent by the first photovoltaic device during the process of the first photovoltaic device communicating with the management module.

The plurality of photovoltaic devices may be connected to each other by a power line. Due to the line impedance, the signal characteristic of the response signal sent by a first photovoltaic device and received by the second photovoltaic device located at the same photovoltaic string as the first photovoltaic device may be different from that of the response signal received by the second photovoltaic device located at a different photovoltaic string as the first photovoltaic device. The value of the signal characteristic of the response signal sent by the first photovoltaic device received by the second photovoltaic device located at the same photovoltaic string as the first photovoltaic device may be greater or less than (considering the signal characteristic may be the signal amplitude, the signal attenuation, or the signal impedance) that of the signal characteristic of the response signal sent by the first photovoltaic device and received by the second photovoltaic device located at the different photovoltaic string as the first photovoltaic device. Difference in magnitude between the two values thereof is significant. Thus, the grouping information may be generated according to the signal characteristic of the response signal.

Based on the above step 301 and step 302, firstly, the first photovoltaic device among the plurality of photovoltaic devices in each of the plurality of photovoltaic strings is determined based on communication with the plurality of the photovoltaic devices. The first photovoltaic device is configured for determining the second photovoltaic device which is located at the same photovoltaic string as the first photovoltaic device. Then, the plurality of photovoltaic devices are grouped based on the grouping information of the second photovoltaic device. The plurality of photovoltaic devices are automatically grouped in the present invention, thereby improving grouping efficiency.

In an embodiment, referring to FIG. 4, determining the first photovoltaic device among the plurality of photovoltaic devices in each of plurality of photovoltaic strings based on communication with the plurality of photovoltaic devices may further include steps 401 and 402.

Step 401 may include sending a first signal instruction to the plurality of photovoltaic devices.

Step 402 may include receiving a first response signal sent by a photovoltaic device in response to the first signal instruction and determining the first photovoltaic device among the plurality of photovoltaic devices in a photovoltaic string based on the first response signal, in which the first response signal may include device information of a corresponding photovoltaic device.

The first response signal may include device information of the photovoltaic device sending the first response signal, or may further include device information of the first photovoltaic device in a photovoltaic string to which the photovoltaic device belongs.

The device information may include either or both of identification information and a status identifier. The identification information may include either or both of a sequence number and a logical address.

The first photovoltaic device of the plurality of photovoltaic device may be determined based on the step 401 and step 402.

In an embodiment, the first signal instruction may include a state acquiring instruction which includes the identification information of a photovoltaic device. The photovoltaic device corresponding to the identification information may send the first response signal. The identification information may be the sequence number of the photovoltaic device. The device information of the photovoltaic device may include the status identifier of the photovoltaic device. The status identifier is configured for identifying which of a first photovoltaic device, a second photovoltaic device and a photovoltaic device to be grouped is the photovoltaic device.

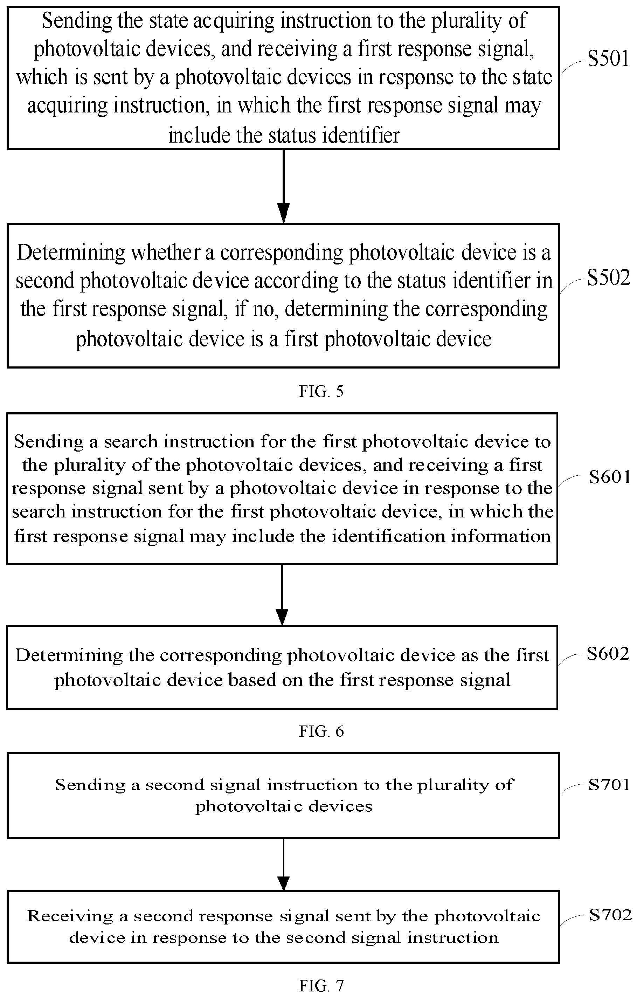

Referring to FIG. 5, determining the first photovoltaic device among the plurality of photovoltaic devices may specifically include following step 501 and step 502.

Step 501 may include sending the state acquiring instruction to the plurality of photovoltaic devices, and receiving a first response signal which is sent by a photovoltaic device in response to the state acquiring instruction. The first response signal may include the status identifier.

The first response signal may be sent in a broadcast manner.

Step 502 may include determining whether a corresponding photovoltaic device is a second photovoltaic device according to the status identifier in the first response signal, and if no, further determining the corresponding photovoltaic device is a first photovoltaic device.

Since the first response signal includes the status identifier, the first photovoltaic device among the plurality of photovoltaic devices may be determined by the status identifier of the first response signal after receiving the first response signal.

In an embodiment, the first response signal may further carry the identification information of the first photovoltaic device in the photovoltaic string to which the photovoltaic device belongs, such as the sequence number of the first photovoltaic device. So at the same time as determining the type of the photovoltaic device, the photovoltaic string to which the photovoltaic device belongs may be confirmed.

In another embodiment, the first signal instruction may include a search instruction for the first photovoltaic device. A photovoltaic device that successfully responds to the search instruction for the first photovoltaic device may send a first response signal. The corresponding photovoltaic device may be determined to be the first photovoltaic device based on the first response signal, and the device information may include identification information of the corresponding photovoltaic device, such as the sequence number of the corresponding photovoltaic device.

Referring to FIG. 6, determining the first photovoltaic device among the plurality of photovoltaic devices may specifically include following step 601 and step 602.

Step 601 may include sending a search instruction for the first photovoltaic device to the plurality of the photovoltaic devices, and receiving a first response signal sent by a photovoltaic device in response to the search instruction for the first photovoltaic device. The first response signal may include the identification information.

In an embodiment, the first response signal may carry the identification information of a corresponding photovoltaic device, such as the sequence number of the photovoltaic device.

In an embodiment, the first response signal may further carry the identification information of the first photovoltaic device in the photovoltaic string to which the corresponding photovoltaic device belongs, such as the sequence number of the first photovoltaic device. So the type of the photovoltaic device and the photovoltaic string to which the photovoltaic device belongs may be determined simultaneously.

The plurality of photovoltaic devices may response to the search instruction for the first photovoltaic device in a competitive manner. Only the photovoltaic device that successfully responds to the search instruction for the first photovoltaic device may send the first response signal.

In an embodiment, other photovoltaic devices except for the first photovoltaic device and the second photovoltaic device may response to the search instruction for the first photovoltaic device in a competitive manner.

When the first response signal received by the management module is normal, it means that only one photovoltaic device successfully responds.

Furthermore, when the management module does not receive the first response signal, the management module may repeatedly send the search instruction for the first photovoltaic device.

When only one photovoltaic device successfully responds to the search instruction for the first photovoltaic device and sends the first response signal, the management module and other photovoltaic devices may record the identification information in the first response signal and the signal characteristic of the first response signal.

In an embodiment, the search instruction for the first photovoltaic device may be sent to the photovoltaic device that successfully responds to the search instruction for the first photovoltaic device multiple times to ask the photovoltaic device to send the first response signal again, which further improves the accuracy of grouping.

Step 602 may include determining the corresponding photovoltaic device as the first photovoltaic device based on the first response signal.

The device information may include the identification information of the corresponding photovoltaic device. The management module may determine the photovoltaic device corresponding to the identification information as the first photovoltaic device in one of the plurality of the photovoltaic strings.

In an embodiment, before sending the search instruction for the first photovoltaic device to the plurality of the photovoltaic devices, the method may further include following step: sending a competitive-response instruction to the plurality of photovoltaic devices.

The management module may send the competitive-response instruction to the plurality of photovoltaic devices, such as in the broadcast manner.

The management module may send the competitive-response instruction to the plurality of the photovoltaic devices. All the other photovoltaic devices except for the first photovoltaic device and the second photovoltaic device may detect whether a channel is idle after receiving the competitive-response instruction and random delay. If the channel is idle, other photovoltaic devices except for the first photovoltaic device and the second photovoltaic device may reply the competitive-response instruction, and the competitive response is successful. If the channel is busy, other photovoltaic devices except for the first photovoltaic device and the second photovoltaic device may not reply the competitive-response instruction, and the competitive response is failed.

In the present embodiment, only the photovoltaic device successfully responding to the competitive-response instruction may participate in the competitive response to the search instruction for the first photovoltaic device, so that search range of the first photovoltaic device may be significantly narrowed down and efficiency of searching and grouping the plurality of photovoltaic devices may be improved.

Furthermore, if the management module determines there is no response, the management module may repeatedly send the competitive-response instruction. If there is still no response, a search instruction for the second photovoltaic device may be sent to the second photovoltaic device. The following description may describe the search instruction for the second photovoltaic device in detail.

In an embodiment. Referring to FIG. 7, determining the first photovoltaic device among the plurality of photovoltaic devices in each of the plurality of photovoltaic strings based on communication with each of the plurality of photovoltaic devices may further include following step 701 and step 702.

Step 701 may include sending a second signal instruction to the plurality of photovoltaic devices. The second signal instruction may include a signal threshold, and the signal threshold is configured for determining the second photovoltaic device which is located at the same photovoltaic string as a corresponding first photovoltaic device and the grouping information of the second photovoltaic device.

In an embodiment, the second signal instruction may include a registering instruction for the first photovoltaic device. Furthermore, the second signal instruction may further include the identification information of the first photovoltaic device to notice that the corresponding photovoltaic device has been registered as the first photovoltaic device. The second signal instruction may be sent in the broadcast manner.

The signal threshold may be determined by the signal characteristic of the response signal received by the management module.

Specifically, the value of the signal threshold may be set by the management module according to a signal margin and a value of the signal characteristic of the response signal sent by the photovoltaic device and received by the management module. The value of the signal threshold in the second signal instruction, which is sent each time, may be different.

Further, the signal margin may be set according to the practical situation. The signal threshold may be a difference between the value of the signal characteristic of the response signal sent by the first photovoltaic device and received by the management module and the signal margin.

In an embodiment, the value of the signal threshold may be set by the management module according to the signal margin and a value of the signal characteristic of the first response signal received by the management module.

The signal margin may be set according to the practical situation. The signal threshold may be a difference between the value of the signal characteristic of the first response signal sent by the first photovoltaic device and received by the management module and the signal margin.

The management module may send the second signal instruction to notify other photovoltaic devices except for the first photovoltaic device to generate grouping information of other photovoltaic devices based on the second signal instruction. The grouping information, for example, may be the identification information of a first photovoltaic device stored by the second photovoltaic device, and the first photovoltaic device is located as the second photovoltaic device.

Other photovoltaic devices may determine whether themselves are located at the same photovoltaic string as the corresponding first photovoltaic device according to the signal characteristic of the first response signal and the corresponding signal threshold, and update either or both of the stored status identifier and identification information of the first photovoltaic device (i.e., grouping information).

In an embodiment, after other photovoltaic devices receive the second signal instruction, other photovoltaic devices may compare a value of a signal characteristic of the latest received first response signal with the corresponding signal threshold in the second signal instruction.

In an embodiment, after other photovoltaic devices receive the second signal instruction, for example, other photovoltaic devices may determine whether the identification information of the photovoltaic device carried in the received first response signal is consistent with the identification information of the photovoltaic device carried in the second signal instruction. If yes, other photovoltaic devices may compare the value of the signal characteristic of the first response signal with the corresponding signal threshold; otherwise, the first response signal may be not sent by the first photovoltaic device specified by the second signal instruction, and other photovoltaic devices may not compare the value of the signal characteristic of the first response signal with the corresponding signal threshold. For example, other photovoltaic devices may determine whether the sequence number of the photovoltaic device carried in the received first response signal is the same as the sequence number of the photovoltaic device carried in the received second signal instruction.

In an embodiment, the signal characteristic may include the signal amplitude. Other photovoltaic devices may compare the signal amplitude of the received first response signal with the corresponding signal threshold. When the signal amplitude of the received first response signal is greater than the signal threshold, other photovoltaic devices may determine that themselves are located at the same photovoltaic string as the corresponding first photovoltaic device, and update either of both of the stored status identifier and the identification information of the first photovoltaic device.

In another embodiment, the second photovoltaic device may receive first response signals sent by a plurality of different first photovoltaic devices. When the second photovoltaic device determines that signal amplitudes of received first response signals are greater than corresponding signal thresholds, the second photovoltaic device may sort the differences between the signal amplitudes of the received first response signals sent by the plurality of first photovoltaic devices and corresponding signal thresholds, select to be in the same photovoltaic string as the first photovoltaic device with the maximum difference, and update stored identification information of the first photovoltaic device to identification information of the first photovoltaic device with the maximum difference.

In another embodiment, the second photovoltaic device may receive the first response signals sent by a plurality of different first photovoltaic devices. When the second photovoltaic device determines that signal amplitudes of received first response signals are greater than corresponding signal thresholds, the second photovoltaic device may sort the signal amplitudes of the received first response signals sent by the plurality of first photovoltaic devices, select to be in the same photovoltaic string as the first photovoltaic device with the maximum signal amplitude, and update stored identification information of the first photovoltaic device to identification information of the first photovoltaic device with the maximum signal amplitude.

It should be noted that when the signal characteristic is the signal impedance or the signal attenuation, the principle of determining the grouping information may be basically the same as any one of the above embodiments, which is not described herein in detail.

Step 702 may include receiving a second response signal sent by the photovoltaic device in response to the second signal instruction.

The management module receiving the second response signal means that the corresponding photovoltaic device is successfully registered as a first photovoltaic device.

In an embodiment, the second response signal may include the device information of the corresponding photovoltaic device.

In an embodiment, it is considered that some second photovoltaic devices do not receive the first response signal, when the first photovoltaic device sends the second response signal, the management module and other photovoltaic devices may record the identification information of the photovoltaic device in the second response signal and the signal characteristic of the second response signal, and the management module may repeatedly send the second signal instruction multiple times. Other photovoltaic devices may determine whether themselves are located at the same photovoltaic string as the first photovoltaic device according to the signal characteristic of the received second response signal and the corresponding signal threshold, which can prevent devices from being missed in search and registration, and improve the accuracy of the grouping.

The determining method of determining whether other photovoltaic devices are located at the same photovoltaic string as the first photovoltaic device according to the signal characteristic of second response signal and a corresponding signal threshold may be the same as the determining method according to the signal characteristic of first response signal and a corresponding signal threshold, which is not specifically described herein.

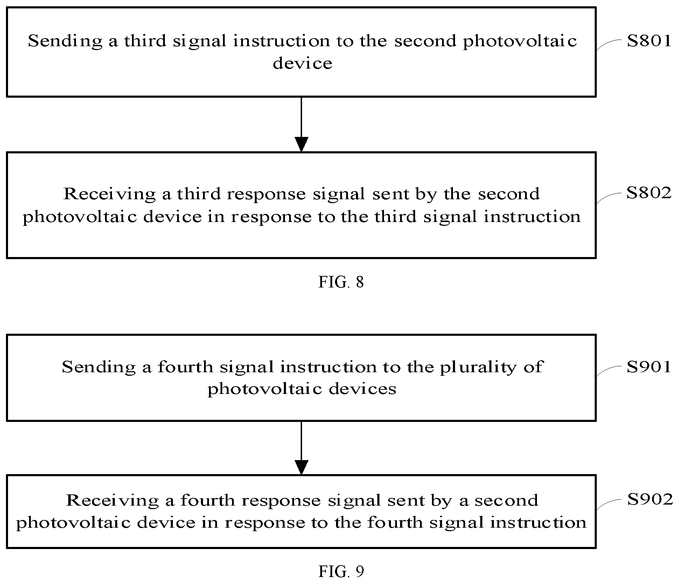

In an embodiment, see FIG.8, grouping the plurality of photovoltaic devices based on the grouping information of the second photovoltaic device may include following steps 801 and 802.

Step 801 may include sending a third signal instruction to the second photovoltaic device.

Step 802 may include receiving a third response signal sent by the second photovoltaic device in response to the third signal instruction.

The third response signal may include either or both of the grouping information and the identification information of a corresponding second photovoltaic device.

In an embodiment, the management module, for example, may sequentially send the third signal instruction in the broadcast manner. The third signal instruction may include a reporting instruction for the grouping information. The third signal instruction may include identification information of a specified second photovoltaic device to instruct the specified second photovoltaic device to report grouping information. The grouping information may include the identification information of the first photovoltaic device in the photovoltaic string to which the corresponding second photovoltaic device belongs.

In another embodiment, the management module, for example, may send the third signal instruction in the broadcast manner. The third signal instruction may include a search instruction for the second photovoltaic device, and all unregistered second photovoltaic devices may participate in competitive response.

The search instruction for the second photovoltaic device may include the identification information of a first photovoltaic device. Only the unregistered second photovoltaic devices located at the same photovoltaic string as the first photovoltaic device may participate in the competitive response. Therefore, a searching range of the second photovoltaic device may be narrowed to one photovoltaic string, the searching range may be significantly narrowed down, thereby improving searching efficiency for the second photovoltaic device. The second photovoltaic device may only report the identification information thereof, such as the sequence number, and the management module may determine the second photovoltaic device is located at the same photovoltaic string as the first photovoltaic device.

In an embodiment, before the management module sends the search instruction for the second photovoltaic device, the management module may send a notification instruction in the broadcast manner. The notification instruction may include the identification information of a first photovoltaic device. The notification instruction is configured to notify the second photovoltaic device that the second photovoltaic device located at the same photovoltaic string as the first photovoltaic device in the notification instruction would be in response to the search instruction for the second photovoltaic device which is sent later. So the search instruction for the second photovoltaic device may not be required to carry the identification information of the first photovoltaic device. Similarly, the search range of the second photovoltaic device may be narrowed to one photovoltaic string, the search range may be significantly narrowed down, thereby improving the searching efficiency for the second photovoltaic device.

In an embodiment, when the management module does not receive the third response signal, the management module may send the search instruction for the second photovoltaic device repeatedly. When the management module does not receive the third response signal multiple times, the management module may stop sending the search instruction for the second photovoltaic device, and the search for the second photovoltaic device may be finished.

The management module may group the plurality of photovoltaic devices based on the grouping information of the second photovoltaic device.

In an embodiment, see FIG. 9, the method further includes following steps 901 and 902.

Step 901 may include sending a fourth signal instruction to the plurality of photovoltaic devices.

In an embodiment, the fourth signal instruction may include the identification information of a second photovoltaic device to notify that the corresponding second photovoltaic device has been registered.

In an embodiment, a registered second photovoltaic device may not be in response to the search instruction for the second photovoltaic device any more.

Step 902 may include receiving a fourth response signal sent by a second photovoltaic device in response to the fourth signal instruction.

In an embodiment, the step 902 may be omitted, the fourth signal instruction may be repeatedly sent to the second photovoltaic device multiple times.

In an embodiment, when the first signal instruction includes the state acquiring instruction, the first signal instruction, the second signal instruction, the third signal instruction, or the fourth signal instruction may include a logical address assigned for the corresponding photovoltaic device to implement networking of the photovoltaic device.

In an embodiment, when the first signal instruction includes the search instruction for the first photovoltaic device, the second signal instruction and the fourth signal instruction may include the logical address assigned for the corresponding photovoltaic device to implement networking of the photovoltaic device.

In an embodiment, networking of all photovoltaic devices may be first finished, then the plurality of photovoltaic devices may be grouped according to the above grouping method. Alternatively, the grouping and networking of the plurality of photovoltaic devices may be carried out interactively, and the grouping and networking of the plurality of photovoltaic devices may be achieved at the same time.

Furthermore, the plurality of the photovoltaic devices may be automatically networked while grouped, which means that the first photovoltaic device and the second photovoltaic device of each of the plurality of photovoltaic strings may be determined, and device search, device networking, and device grouping may be combined with each other.

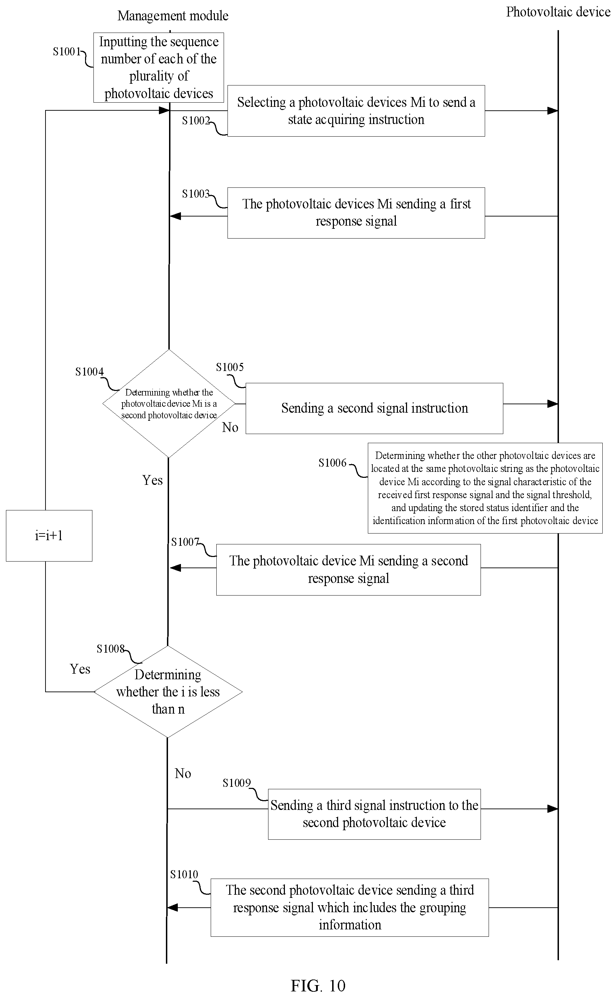

In a specific embodiment, an overall flowchart of the photovoltaic device grouping method may refer to FIG. 10, including following step 1001 to step 1010.

Step 1001 may include manually inputting the sequence number of each of the plurality of photovoltaic devices.

The sequence number herein may include MAC address of the photovoltaic devices, which are inputted to an installation assistant APP manually, and then sent to the management module by the installation assistant APP.

Step 1002 may include the management module selecting a photovoltaic device Mi to send a first signal instruction.

The first signal instruction herein may include the state acquiring instruction.

In an embodiment, initially, it is set that i = 1, the management module may send the first signal instruction to the photovoltaic device M1.

The photovoltaic device Mi herein may be numbered sequentially based on the order of the sequence numbers inputted by the user. For example, the user may input sequence number "1x, bx, .......", then the photovoltaic device with the sequence number of 1x may be M1, and the photovoltaic device with the sequence number of bx may be M2, and so on.

Step 1003 may include the photovoltaic device Mi sending a first response signal.

At this step, the photovoltaic device Mi may send the first response signal to the management module and other photovoltaic devices.

Step 1004 may include the management module determining whether the photovoltaic device Mi is a second photovoltaic device, if no, further determining the photovoltaic device Mi as a first photovoltaic device of one of the plurality of photovoltaic strings, and entering step 1005, and if yes, entering step 1008.

At this step, if the photovoltaic device Mi is determined as a first photovoltaic device, the management module and other photovoltaic device may record the identification information of the photovoltaic device Mi carried in the first response signal sent by the photovoltaic device Mi and the signal characteristic of the received first response signal.

Other photovoltaic devices may include the photovoltaic devices except for the first photovoltaic device.

Step 1005 may include the management module sending a second signal instruction.

The second signal instruction may include a registering instruction for the first photovoltaic device. The second signal instruction may include the identification information of the photovoltaic device Mi and a signal threshold. The identification information, for example, may include the sequence number of the photovoltaic device Mi.

Step 1006 may include other photovoltaic devices determining whether themselves are located at the same photovoltaic string as the photovoltaic device Mi according to the signal characteristic of the received first response signal and the signal threshold, and updating the stored status identifier and the identification information of the first photovoltaic device.

Other photovoltaic devices may include the photovoltaic devices except for the first photovoltaic device.

Step 1007 may include the photovoltaic device Mi sending a second response signal.

The second response signal is configured to send determining information from the photovoltaic device Mi to the management module to determine that the photovoltaic device Mi has received the second signal instruction. The management module receiving the second response signal means that the photovoltaic device Mi has been registered, and the photovoltaic device Mi is registered as a first photovoltaic device. The second response signal includes the identification information of the photovoltaic device Mi, such as the sequence number of the photovoltaic device Mi.

Step 1008 may include the management module determining whether the i is less than n, if yes, then i = i + 1, and returning to the step 1002, and if no, entering step 1009.

The n may be the number of the photovoltaic devices in the photovoltaic system.

Step 1009 may include the management module sending a third signal instruction to the second photovoltaic device.

The third signal instruction may include a reporting instruction for the grouping information, and the third signal instruction may include identification information of a specified second photovoltaic device to instruct the specified second photovoltaic device to report grouping information.

Step 1010 may include the second photovoltaic device sending a third response signal which includes the grouping information.

At this step, the specified second photovoltaic device at the step 1009 may send the third response signal which includes the grouping information of the specified second photovoltaic device. The third response signal may further include the identification information of the first photovoltaic device located at the same photovoltaic string as the specified second photovoltaic device, which means that the specified second photovoltaic device and the first photovoltaic device are in a same photovoltaic string.

In an embodiment, at the step 1004, if the management module determines the photovoltaic device Mi as a second photovoltaic device, it may directly enter the step 1009 to report the grouping information of the second photovoltaic device Mi, then the management module may determine whether all photovoltaic devices have reported the grouping information, and if no, it may return to the step 1002 and repeat the foregoing steps until all photovoltaic devices are registered and grouped.

Furthermore, the photovoltaic device grouping method may further include: the management module sending a fourth signal instruction to second photovoltaic devices.

The management module may sequentially send fourth signal instructions to second photovoltaic devices to notify that the corresponding second photovoltaic device has been registered. The fourth signal instruction may include the identification information of the second photovoltaic device, and the identification information, for example, may include the sequence number of the second photovoltaic device.

In an embodiment, the identification information may further include the logical address of the corresponding second photovoltaic device assigned by the management module to network the plurality of photovoltaic devices.

The corresponding second photovoltaic device may send a fourth response signal.

In other embodiments, the step of the second photovoltaic device sending the fourth response signal may be omitted. The fourth signal instructions may be repeatedly sent to the second photovoltaic devices multiple times to ensure that the logical address is assigned and the second photovoltaic devices are registered successfully.

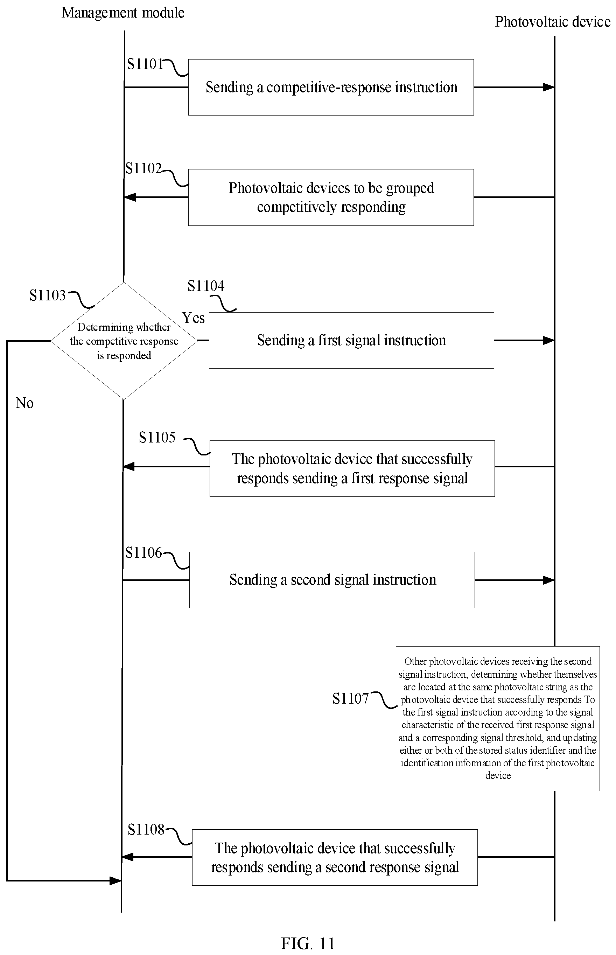

In another specific embodiment, the overall flowchart of the photovoltaic device grouping method may refer to FIG. 11, including following step 1101 to step 1108.

Step 1101 may include the management module sending a competitive-response instruction.

Step 1102 may include photovoltaic devices to be grouped competitively responding.

The photovoltaic devices to be grouped may include other photovoltaic devices expect for the first photovoltaic device and the second photovoltaic device. After receiving the competitive-response instruction and the random delay is performed, the photovoltaic devices to be grouped may detect whether the channel is idle, if yes, the photovoltaic devices to be grouped may reply the competitive-response instruction, and the competitive response may be successful, and if no, the photovoltaic devices to be grouped may not reply the competitive-response instruction, and the competitive response may fail.

Step 1103 may include the management module determining whether the competitive response is responded, if yes, entering step 1104, and if no, entering step 1109.

The step 1104 may include the management module sending a first signal instruction.

At this step, the first signal instruction may include a search instruction for the first photovoltaic device, and the photovoltaic device successfully responding to the competitive-response instruction may competitively response to the search instruction for the first photovoltaic device after receiving the search instruction for the first photovoltaic device.

After steps 1101 to 1103, the search range of the first photovoltaic device at step 1104 may be significantly narrowed down, thereby improving efficiency of device searching and grouping.

Step 1105 may include the photovoltaic device that successfully responds sending a first response signal.

When only one photovoltaic device successfully responds to the first signal instruction and sends the first response signal, the management module and other photovoltaic devices may record the identification information in the first response signal and the signal characteristic of the first response signal.

The management module may determine that the photovoltaic device that successfully sends the first response signal is the first photovoltaic device in the photovoltaic string at which the photovoltaic device is located.

The photovoltaic device that successfully responds each time, for example, may be located at different photovoltaic strings.

Step 1106 may include the management module sending a second signal instruction.

Step 1107 may include other photovoltaic devices receiving the second signal instruction, determining whether themselves are located at the same photovoltaic string as the photovoltaic device that successfully responds to the first signal instruction according to the signal characteristic of the received first response signal and a corresponding signal threshold, and updating either or both of the stored status identifier and the identification information of the first photovoltaic device.

At this step, the photovoltaic device that successfully responds to the first signal instruction may be the first photovoltaic device determined at step 1105.

Step 1108 may include the photovoltaic device that successfully responds sending a second response signal.

At this step, when the management module successfully receives the second response signal, it returns to step 1101.

At this step, the photovoltaic device that successfully responds to the first signal instruction may be the first photovoltaic device determined at step 1105.

The first photovoltaic device and the second photovoltaic device of the plurality of photovoltaic devices may be determined based on step 1101 to step 1108.

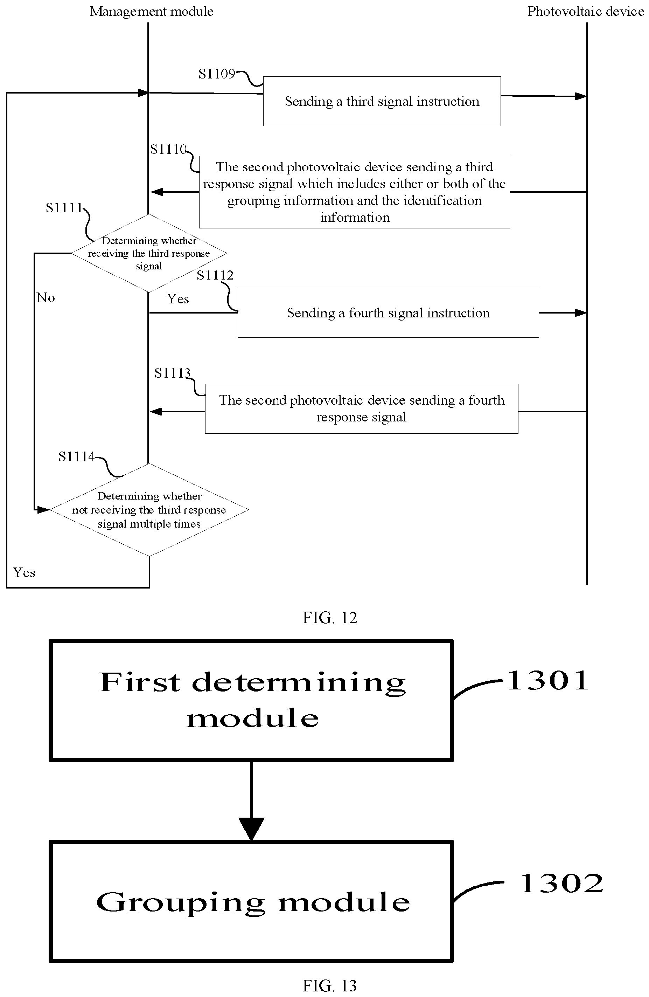

As for each of the plurality of photovoltaic strings, the steps referring to FIG. 12 may be performed to group the plurality of photovoltaic devices.

Step 1109 may include the management module sending a third signal instruction.

At this step, the third signal instruction may include a search instruction for the second photovoltaic device, the management module may send the search instruction for the second photovoltaic device to the plurality of photovoltaic devices, for example, in the broadcast manner, and all unregistered second photovoltaic device may participate in the competitive response.

In an embodiment, the search instruction for the second photovoltaic device may include the identification information of a first photovoltaic device. Only the unregistered second photovoltaic device located at the same photovoltaic string as the first photovoltaic device may participate in the competitive response. The search range of the second photovoltaic device may be narrowed to one photovoltaic string, and the search range of the second photovoltaic device may be significantly narrowed down, thereby improving the searching efficiency for the second photovoltaic device.

In another embodiment, before the management module sends the search instruction for the second photovoltaic device, the management module may send a notification instruction in the broadcast manner. The notification instruction may include the identification information of a first photovoltaic device to notify the second photovoltaic device that the second photovoltaic device located at the same photovoltaic string as the first photovoltaic device in the notification instruction would be in response to the search instruction for the second photovoltaic device which is sent later. So the search instruction for the second photovoltaic device may not be required to carry the identification information of a first photovoltaic device.

Step 1110 may include the second photovoltaic device sending a third response signal which includes either or both of the grouping information and the identification information.

step 1111 may include the management module determining whether receiving the third response signal, if yes, entering step 1112, and if no, entering step 1114.

The step 1112 includes the management module sending a fourth signal instruction to the second photovoltaic device.

At this step, a registering instruction for the second photovoltaic device is configured to notify that the second photovoltaic device has been registered, and the registered second photovoltaic device may not be in response to the search instruction for the second photovoltaic device.

Step 1113 may include the second photovoltaic device sending a fourth response signal.

In other embodiments, step 1113 may be omitted.

Step 1114 may include the management module determining whether not receiving the third response signal multiple times, if yes, entering step 1109, and if no, ending the searching, and all photovoltaic devices have been registered and grouped.

The number of times that the management module dose not received the third response signal may be set according to the practical situation.

In other embodiments, step 1101 to step 1103 may be omitted, and the photovoltaic devices to be grouped may competitively respond to the first signal instruction at step 1104.

In the present embodiment, the grouping information of the second photovoltaic device may be reported and the second photovoltaic device may be registered after first photovoltaic devices of all photovoltaic strings are searched and registered.

In other embodiments, the grouping information of the second photovoltaic device may be reported and registered after completing searching and registering the first photovoltaic device in each of the plurality of photovoltaic strings.

Although each of a plurality of steps in the above flowchart is sequentially shown as indicated by arrows, the plurality of steps may not be necessary to be sequentially executed as an order indicated by the arrows. Unless otherwise specified in the present invention, there is no strict order limit for execution of these steps, and these steps may be executed in other orders. Moreover, at least some of the steps in the above flowchart may include multiple steps or stages, which are not necessarily executed at the same time, but may be executed at different time. An execution order of these steps or stages may not be necessarily sequential, but be in turn or alternatively executed with other steps, or at least a part of steps or stages of the other steps.

In an embodiment, referring to FIG. 13, the present invention provides a management module for the photovoltaic devices, which is applied to the photovoltaic system referring to FIG. 1 or FIG. 2. The management module includes a first determining module 1301 and a grouping module 1302.

The first determining module 1301 is configured for determining a first photovoltaic device among the plurality of photovoltaic devices in each of the plurality of photovoltaic strings based on communication with the plurality of photovoltaic devices 1301, in which the first photovoltaic device is configured for determining the second photovoltaic device which is located at the same photovoltaic string as the first photovoltaic device.

The grouping module 1302 is configured for grouping the plurality of photovoltaic devices based on the grouping information of the second photovoltaic device, in which the grouping information is determined by the second photovoltaic device according to a response signal, which is sent by the first photovoltaic device during a process of the first photovoltaic device communicating with the management module.

In the present invention, the first photovoltaic device among the plurality of photovoltaic devices in each of the plurality of photovoltaic strings is determined based on communication between the management module and the plurality of photovoltaic devices. The plurality of photovoltaic devices is grouped based on the grouping information of the second photovoltaic device. The plurality of photovoltaic devices are automatically grouped in the present invention, thereby improving the grouping efficiency for grouping the plurality of photovoltaic devices.

In an embodiment, the first determining module is specifically configured for sending a first signal instruction to the plurality of photovoltaic devices, receiving a first response signal sent by a photovoltaic device in response to the first signal instruction, and determining the first photovoltaic device among the plurality of photovoltaic devices in a photovoltaic string based on the first response signal, in which the first response signal may include device information of a corresponding photovoltaic device.

In an embodiment, the first determining module is specifically configured for sending a second signal instruction to the plurality of photovoltaic devices, in which the second signal instruction includes a signal threshold, and the signal threshold is configured to determine the second photovoltaic device which is located at the same photovoltaic string as a corresponding first photovoltaic device and the grouping information of the second photovoltaic device.

In an embodiment, the grouping module is configured for sending a third signal instruction to the second photovoltaic device, and receiving a third response signal sent by a second photovoltaic device in response to the third signal instruction, in which the third response signal may include either or both of the grouping information and identification information of a corresponding second photovoltaic device.

In an embodiment, the grouping module is configured for sending a fourth signal instruction to the plurality of photovoltaic devices, in which the fourth signal instruction is configured to notify that the second photovoltaic device has been registered.

In an embodiment, the first signal instruction may include a state acquiring instruction which includes identification information of a photovoltaic device. The photovoltaic device corresponding to the identification information may send the first response signal. The device information may include a status identifier of the corresponding photovoltaic device, and the status identifier is configured to identify whether the corresponding photovoltaic device is a second photovoltaic device. The first determining module is specifically configured for determining whether the corresponding photovoltaic device is a second photovoltaic device according to the status identifier in the first response signal, and if no, further determining the corresponding photovoltaic device is a first photovoltaic device.

In an embodiment, the first signal instruction may include a search instruction for the first photovoltaic device, a photovoltaic device that successfully responds to the search instruction for the first photovoltaic device may send a first response signal and may be determined to be a first photovoltaic device based on the first response signal, and the device information may include identification information of the corresponding photovoltaic device.

In an embodiment, the grouping information may be determined by the second photovoltaic device according to the signal characteristic of the first response signal and a corresponding signal threshold.

In an embodiment, the signal characteristic of the first response signal may include at least one of signal amplitude, signal impedance, or signal attenuation.

In an embodiment, the grouping information may be determined by the second photovoltaic device according to a maximum difference in an order of differences between the signal amplitudes of the first response signals and the corresponding signal thresholds.

In an embodiment, when the second photovoltaic device of each of the plurality of photovoltaic receives the second signal instruction and determines that identification information of a photovoltaic device carried in the received first response signal is consistent with identification information of a photovoltaic device carried in the second signal instruction, generating the grouping information.

In an embodiment, when the second photovoltaic device does not receive the first response signal, the second signal instruction may be sent to the plurality of photovoltaic devices repeatedly. The grouping information may be determined by the second photovoltaic device according to the signal characteristic of the second response signal and a corresponding signal threshold, and the second response signal may be sent by the first photovoltaic device in response to the second signal instruction.

In an embodiment, the third signal instruction may include a reporting instruction for the grouping information, and the reporting instruction for the grouping information may include identification information of a specified second photovoltaic device to instruct the specified second photovoltaic device to report the grouping information.

In an embodiment, the third signal instruction may include a search instruction for the second photovoltaic device, and the second photovoltaic device that successfully responds to the search instruction for the second photovoltaic device may report either or both of the grouping information thereof and the identification information thereof.

The specific limitation of the management module for the photovoltaic device may refer to the description of the photovoltaic device grouping method, which is not described herein in detail. Each module of the management module for the photovoltaic device may be overall or partly realized by software, hardware or combination of the software and the hardware. The above modules may be embedded in or independent of the processor in a computer device in a hardware form, or stored in a software form in a memory of the computer device, facilitating the processor calling and executing corresponding operations of the above modules.

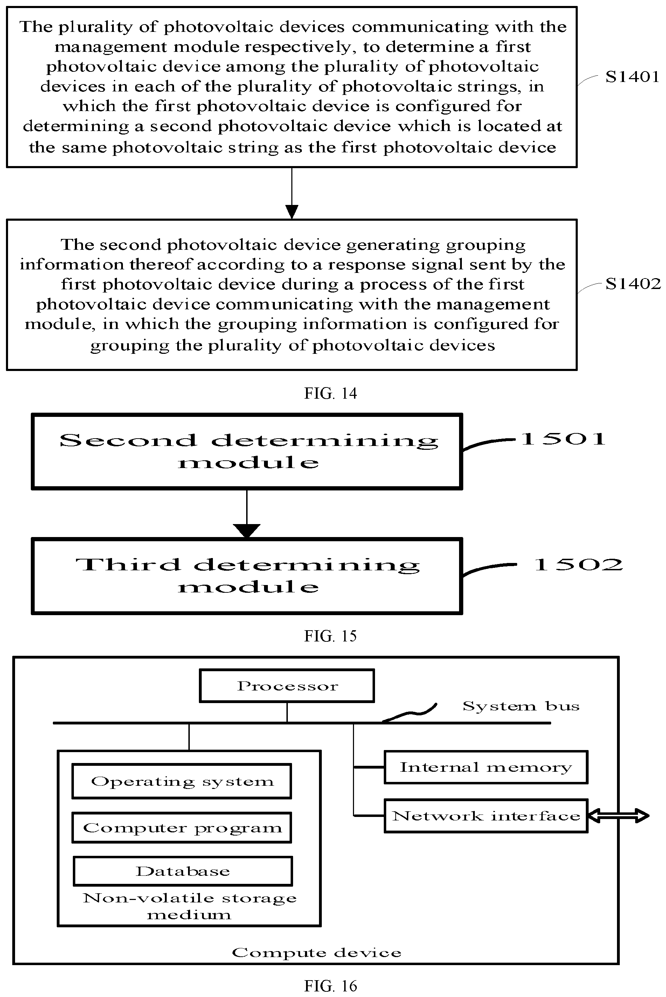

In an embodiment, referring to FIG. 14, a photovoltaic device grouping method is provided, the application of this method to the photovoltaic devices in the photovoltaic system in FIG. 1 or FIG. 2 is taken as an example for explanation, and the method includes following step 1401 and step 1402.

Step 1401 includes the plurality of photovoltaic devices communicating with the management module respectively, to determine a first photovoltaic device among the plurality of photovoltaic devices in each of the plurality of photovoltaic strings, in which the first photovoltaic device is configured for determining a second photovoltaic device which is located at the same photovoltaic string as the first photovoltaic device.

Step 1402 includes the second photovoltaic device generating grouping information thereof according to a response signal sent by the first photovoltaic device during a process of the first photovoltaic device communicating with the management module, in which the grouping information is configured for grouping the plurality of photovoltaic devices.

In the present embodiment, each of the plurality of photovoltaic devices communicates with the management module to determine a first photovoltaic device among the plurality of photovoltaic devices in each of the plurality of photovoltaic strings. The second photovoltaic device generates the grouping information thereof according to a response signal. The response signal is sent by the first photovoltaic device during a process of the first photovoltaic device communicating with the management module, and the grouping information is configured for grouping the plurality of photovoltaic devices. The plurality of photovoltaic devices are automatically grouped in the present invention, thereby improving the grouping efficiency for the plurality of photovoltaic devices.

In an embodiment, the plurality of photovoltaic devices communicating with the management module respectively, to determine a first photovoltaic device among the plurality of photovoltaic devices in each of the plurality of photovoltaic strings may further include: the plurality of photovoltaic devices receiving a first signal instruction sent by the management module, and a photovoltaic device in response to the first signal instruction sending a first response signal to the management module, in which the first response signal is configured for determining the first photovoltaic device among the plurality of photovoltaic device in a photovoltaic string, and the first response signal includes device information of a corresponding photovoltaic device.

In an embodiment, the plurality of photovoltaic devices communicating with the management module respectively, to determine a first photovoltaic device among the plurality of photovoltaic devices in each of the plurality of photovoltaic strings may further include: the plurality of photovoltaic devices receiving a second signal instruction sent by the management module, in which the second signal instruction may include a signal threshold, and the signal threshold is configured to determine the second photovoltaic device which is located at the same photovoltaic string as a corresponding first photovoltaic device and the grouping information of the second photovoltaic device.

In an embodiment, the second photovoltaic device may be determined based on the signal characteristic of the first response signal and a corresponding signal threshold.

In an embodiment, the photovoltaic device grouping method may further include: the plurality of second photovoltaic devices receiving a third signal instruction sent by the management module, and the second photovoltaic device in response to the third signal instruction sending a third response signal to the management module, in which the third response signal may include either or both of the grouping information and identification information of a corresponding second photovoltaic device.

In an embodiment, the first signal instruction may include a state acquiring instruction which includes identification information of a photovoltaic device, the photovoltaic device corresponding to the identification information may send the first response signal, the device information may include a status identifier of the corresponding photovoltaic device, and the status identifier is configured to identify whether the corresponding photovoltaic device is a second photovoltaic device.

In an embodiment, the first signal instruction may include a search instruction for the first photovoltaic device, a photovoltaic device that successfully responds to the search instruction for the first photovoltaic device may send the first response signal, and the device information may include identification information of the photovoltaic device.

In an embodiment, the grouping information may be determined by the second photovoltaic device according to the signal characteristic of the first response signal and a corresponding signal threshold.

In an embodiment, the signal characteristic of the first response signal may include at least one of the signal amplitude, the signal impedance, or the signal attenuation.

In an embodiment, the grouping information may be determined by the second photovoltaic device according to a maximum difference in an order of differences between the signal amplitudes of the first response signals and the corresponding signal thresholds.

In an embodiment, when the second photovoltaic device receives the second signal instruction and determines that identification information of a photovoltaic device carried in the received first response signal is consistent with identification information of a photovoltaic device carried in the second signal instruction, the grouping information may be generated.

In an embodiment, when the second photovoltaic device does not receive the first signal instruction and receives a plurality of second signal instructions, the grouping information may be determined by the second photovoltaic device according to signal characteristics of the plurality of second signal instructions and corresponding signal thresholds.

In an embodiment, the third signal instruction may include a reporting instruction for the grouping information, the reporting instruction for the grouping information may include identification information of a specified second photovoltaic device, and the specified second photovoltaic device may report the grouping information thereof.

In an embodiment, the third signal instruction may include a search instruction for the second photovoltaic device, and the second photovoltaic device that successfully responds to the search instruction for the second photovoltaic device may report either or both of the grouping information thereof and the identification information thereof.

A specific description of the photovoltaic device grouping method in the present embodiment may refer to the description of the above photovoltaic device grouping method, which is not described herein in detail.

Referring to FIG. 15, the present invention provides a photovoltaic device that is applied to the photovoltaic system referring to FIG. 1 or FIG. 2, the photovoltaic device includes a second determining module 1501 and a third determining module 1502. The second determining module 1501 is configured for communication between the photovoltaic device and the management module, to determine a first photovoltaic device among the plurality of photovoltaic devices in each of the plurality of photovoltaic strings, and the first photovoltaic device is configured for determining a second photovoltaic device which is located at the same photovoltaic string as the first photovoltaic device. The third determining module 1502 is configured for determining grouping information of the second photovoltaic device according to the response signal sent by the first photovoltaic device during a process of the first photovoltaic device communicating with the management module, in which the grouping information is configured for grouping the plurality of photovoltaic devices.

In an embodiment, the second determining module 1502 is specifically configured for the photovoltaic device receiving a first signal instruction sent by the management module, and the photovoltaic device in response to the first signal instruction sending a first response signal to the management module, in which the first response signal is configured for determining the first photovoltaic device among the plurality of photovoltaic device in a photovoltaic strings, and the first response signal may include device information of a corresponding photovoltaic device.

In an embodiment, the second determining module is specifically configured for the photovoltaic device receiving a second signal instruction sent by the management module, in which the second signal instruction may include a signal threshold, and the signal threshold is configured for determining the second photovoltaic device which is located at the same photovoltaic string as the corresponding first photovoltaic device and the grouping information of the second photovoltaic device.

In an embodiment, the second photovoltaic device may be determined based on a signal characteristic of the first response signal and a corresponding signal threshold.

In an embodiment, the third determining module is specifically configured for the photovoltaic devices receiving a third signal instruction sent by the management module, and the second photovoltaic device in response to the third signal instruction sending a third response signal to the management module, in which the third response signal may include either or both of the grouping information and identification information of the corresponding second photovoltaic device.

In an embodiment, the first signal instruction may include a state acquiring instruction which includes identification information of a photovoltaic device, the photovoltaic device corresponding to the identification information may send the first response signal, the device information may include the status identifier of the corresponding photovoltaic device, and the status identifier is configured to identify whether the corresponding photovoltaic device is a second photovoltaic device.

In an embodiment, the first signal instruction may include a search instruction for the first photovoltaic device, the photovoltaic device that successfully responds to the search instruction for the first photovoltaic device may send the first response signal, and the device information in the first response signal may include identification information of the corresponding photovoltaic device.

In an embodiment, the grouping information may be determined by the second photovoltaic device according to the signal characteristic of the first response signal and a corresponding signal threshold.

In an embodiment, the signal characteristic of the first response signal may include at least one of the signal amplitude, the signal impedance, or the signal attenuation.

In an embodiment, the grouping information may be determined by the second photovoltaic device according to a maximum difference in an order of differences between the signal amplitudes of the first response signals and the corresponding signal thresholds.

In an embodiment, when the second photovoltaic device receives the second signal instruction and determines that identification information of the photovoltaic device carried in the first response signal is consistent with identification information of the photovoltaic device carried in the second signal instruction, the grouping information may be generated.

In an embodiment, when the second photovoltaic device does not receive the first signal instruction and receives a plurality of second signal instructions, the grouping information may be determined by the second photovoltaic device according to signal characteristics of the plurality of second signal instructions and corresponding signal thresholds.

In an embodiment, the third signal instruction may include a reporting instruction for the grouping information, the reporting instruction for the grouping information may include identification information of a specified second photovoltaic device, and the specified second photovoltaic device may report the grouping information thereof.

In an embodiment, the third signal instruction may include a search instruction for the second photovoltaic device, and the second photovoltaic device that successfully responds to the search instruction for the second photovoltaic device may report either or both of the grouping information thereof and the identification information thereof.

The specific description of the photovoltaic device may refer to the description of the above photovoltaic device grouping method, which is not described herein in detail. Each module of the above plurality of photovoltaic devices may be overall or partly realized by the software, the hardware or combination of the software and the hardware. The above modules may be embedded in or independent of the processor in a computer device in a hardware form, or stored in a software form in a memory of the computer device, facilitating the processor calling and executing the corresponding operations of the above modules.

In an embodiment, a computer device is provided. The computer device may be a server, and a structure thereof may refer to FIG. 16. The computer device includes a processor, a memory, and a network interface connected through a system bus. The processor of the computer device is configured to compute and control. The memory of the computer device includes a non-volatile storage medium and an internal memory. The non-volatile storage medium stores an operating system, a computer program, and a database. This internal memory provides an environment for the operation of the operating system and the computer program in the non-volatile storage medium. The database of the computer device is configured to store action detection data. The network interface of the computer device is configured to communicate with an external terminal via a network connection. The computer program is executed by the processor to implement any of the steps in the embodiments of the photovoltaic device grouping method described above.

One skilled in the art may understand that the structure referring to FIG. 16, which is only a block diagram of a relevant part of the present invention, does not constitute a limitation on the computer device to which the present invention is applied. Specific computer device may include more or fewer components than that shown in the FIG. 16, or combine certain components, or have different component arrangements.

In an embodiment, a computer device is provided, including a memory and a processor. The memory stores a computer program, and the processor executes the computer program to implement any of the steps in the photovoltaic device grouping method embodiments above.

In an embodiment, a computer-readable storage medium is provided, on which a computer program is stored. When the computer program is executed by a processor, it implements any of the steps in the photovoltaic device grouping method embodiments described above.

One skilled in the art may understand that implementing all or part of the processes in the above embodiments may be accomplished by instructing relevant hardware through the computer program. The computer program may be stored in a non-volatile computer-readable storage medium, and when the computer program is executed, it can include the processes of the embodiments of the above methods. Any reference to the memory, the storage medium, the database or other medium used in the embodiments provided in this invention may include at least one of a non-volatile memory or a volatile memory. The non-volatile memory may include a Read Only Memory (ROM), a magnetic tape, a floppy disk, a flash memory, or an optical storage. The volatile memory may include a Random Access Memory (RAM) or an external cache memory. As an illustration and not a limitation, the RAM may take various forms, such as a Static Random Access Memory (SRAM) or a Dynamic Random Access Memory (DRAM), etc.

The various technical features of the above embodiments may be combined arbitrarily, and all possible combinations of the various technical features of the above-described embodiments have not been described for the sake of conciseness of description. However, as long as there is no contradiction in the combinations of these technical features, they should be considered to be within the scope of the present description.

The above-described embodiments express only several embodiments of the present invention, which are described in a more specific and detailed manner, but are not to be construed as a limitation on the scope of the present invention. For one skilled in the art, several deformations and improvements can be made without departing from the conception of the present invention, all of which fall within the scope of protection of the present invention. Therefore, the scope of protection of the present invention shall be subject to the attached claims.

## Claims

1. A photovoltaic device grouping method, applied to a management module in a photovoltaic system, and the photovoltaic system further comprising a plurality of photovoltaic strings, each of which comprises a plurality of photovoltaic devices connected in series and a plurality of photovoltaic modules connected to the plurality of photovoltaic devices respectively, **characterized in that** the method comprises:
determining a first photovoltaic device among the plurality of photovoltaic devices in each of the plurality of photovoltaic strings based on communication with the plurality of photovoltaic devices, wherein the first photovoltaic device is configured for determining a second photovoltaic device which is located at the same photovoltaic string as the first photovoltaic device; and
grouping the plurality of photovoltaic devices based on grouping information of the second photovoltaic device, wherein the grouping information is determined by the second photovoltaic device according to a response signal, which is sent by the first photovoltaic device during a process of the first photovoltaic device communicating with the management module.

2. The method of claim 1, wherein determining the first photovoltaic device among the plurality of photovoltaic devices in each of the plurality of photovoltaic strings based on communication with the plurality of photovoltaic devices further comprises:
sending a first signal instruction to the plurality of photovoltaic devices; and
receiving a first response signal sent by a photovoltaic device in response to the first signal instruction, and determining the first photovoltaic device among the plurality of photovoltaic devices in a photovoltaic string based on the first response signal, wherein the first response signal comprises device information of a corresponding photovoltaic device.

3. The method of claim 2, wherein determining the first photovoltaic device among the plurality of photovoltaic devices in each of the plurality of photovoltaic strings based on communication with the plurality of photovoltaic devices further comprises:
sending a second signal instruction to the plurality of photovoltaic devices, wherein the second signal instruction comprises a signal threshold, and the signal threshold is configured to determine the second photovoltaic device which is located at the same photovoltaic string as a corresponding first photovoltaic device and the grouping information of the second photovoltaic device.

4. The method of claim 1, wherein grouping the plurality of photovoltaic devices based on grouping information of the second photovoltaic device further comprises:
sending a third signal instruction to the second photovoltaic device; and
receiving a third response signal sent by a second photovoltaic device in response to the third signal instruction, wherein the third response signal comprises either or both of the grouping information and identification information of a corresponding second photovoltaic device.

5. The method of claim 2 or claim 4, further comprising:
sending a fourth signal instruction to the plurality of photovoltaic devices, wherein the fourth signal instruction is configured to notify that the second photovoltaic device has been registered.

6. The method of claim 2, wherein the first signal instruction comprises a state acquiring instruction which comprises identification information of a photovoltaic device, the photovoltaic device corresponding to the identification information sends the first response signal, the device information of the corresponding photovoltaic device comprises a status identifier of the corresponding photovoltaic device, and the status identifier is configured to identify whether the corresponding photovoltaic device is a second photovoltaic device; and
determining the first photovoltaic device among the plurality of photovoltaic devices in the photovoltaic string based on the first response signal further comprises:
determining whether the corresponding photovoltaic device is a second photovoltaic device according to the status identifier in the first response signal, and if no, further determining the corresponding photovoltaic device is a first photovoltaic device.

7. The method of claim 2, wherein the first signal instruction comprises a search instruction for the first photovoltaic device, a photovoltaic device that successfully responds to the search instruction for the first photovoltaic device sends the first response signal and is determined to be the first photovoltaic device based on the first response signal, and the device information of the corresponding photovoltaic device comprises identification information of the corresponding photovoltaic device.

8. The method of claim 3, wherein the grouping information is determined by the second photovoltaic device according to a signal characteristic of the first response signal and a corresponding signal threshold.

9. The method of claim 8, wherein the signal characteristic of the first response signal comprises at least one of signal amplitude, signal impedance, or signal attenuation.

10. The method of claim 9, wherein the grouping information is determined by the second photovoltaic device according to a maximum difference in an order of differences between signal amplitudes of first response signals and corresponding signal thresholds.

11. The method of claim 3, further comprising: when the second photovoltaic device receives the second signal instruction and determines that identification information of a photovoltaic device carried in the received first response signal is consistent with identification information of a photovoltaic device carried in the second signal instruction, generating the grouping information.

12. The method of claim 3, further comprising: sending the second signal instruction to the plurality of photovoltaic devices repeatedly, wherein the grouping information is determined by the second photovoltaic device according to a signal characteristic of a second response signal and a signal threshold corresponding to the second response signal, and the second response signal is sent by the first photovoltaic device in response to the second signal instruction.

13. The method of claim 4, wherein the third signal instruction comprises a reporting instruction for the grouping information, and the reporting instruction for the grouping information comprises identification information of a specified second photovoltaic device and is configured to instruct the specified second photovoltaic device to report the grouping information of the specified second photovoltaic device.

14. The method of claim 4, wherein the third signal instruction comprises a search instruction for the second photovoltaic device, and a second photovoltaic device that successfully responds to the search instruction for the second photovoltaic device reports either or both of the grouping information thereof and the identification information thereof.

15. A management module, applied to a photovoltaic system, and the photovoltaic system further comprising a plurality of photovoltaic strings, each of which comprises a plurality of photovoltaic devices connected in series and a plurality of photovoltaic modules connected to the plurality of photovoltaic devices respectively, **characterized in that** the management module comprises a first determining module and a grouping module;
the first determining module is configured for determining a first photovoltaic device among the plurality of photovoltaic devices in each of the plurality of photovoltaic strings based on communication with the plurality of photovoltaic devices, wherein the first photovoltaic device is configured for determining a second photovoltaic device which is located at the same photovoltaic string as the first photovoltaic device; and
the grouping module is configured for grouping the plurality of photovoltaic devices based on grouping information of the second photovoltaic device, wherein the grouping information is determined by the second photovoltaic device according to a response signal, which is sent by the first photovoltaic device during a process of the first photovoltaic device communicating with the management module.

16. A photovoltaic device grouping method, applied to a photovoltaic device in a photovoltaic system, the photovoltaic system comprising a plurality of photovoltaic strings and a management module, and each of the plurality of photovoltaic strings comprising a plurality of photovoltaic devices connected in series and a plurality of photovoltaic modules connected to the plurality of photovoltaic devices respectively, **characterized in that** the method comprises:
the plurality of photovoltaic devices communicating with the management module respectively, to determine a first photovoltaic device among the plurality of photovoltaic devices in each of the plurality of photovoltaic strings, wherein the first photovoltaic device is configured for determining a second photovoltaic device which is located at the same photovoltaic string as the first photovoltaic device; and
the second photovoltaic device generating grouping information thereof according to a response signal, wherein the response signal is sent by the first photovoltaic device during a process of the first photovoltaic device communicating with the management module, and the grouping information is configured for grouping the plurality of photovoltaic devices.

17. The method of claim 16, wherein the plurality of photovoltaic devices communicating with the management module respectively, to determine a first photovoltaic device among the plurality of photovoltaic devices in each of the plurality of photovoltaic strings, further comprises:
the plurality of photovoltaic devices receiving a first signal instruction sent by the management module; and
a photovoltaic device in response to the first signal instruction sending a first response signal to the management module, wherein the first response signal is configured for determining the first photovoltaic device among the plurality of photovoltaic device in a photovoltaic string, and the first response signal comprises device information of a corresponding photovoltaic device.

18. The method of claim 17, wherein the plurality of photovoltaic devices communicating with the management module respectively, to determine a first photovoltaic device among the plurality of photovoltaic devices in each of the plurality of photovoltaic strings, further comprises:
the plurality of photovoltaic devices receiving a second signal instruction sent by the management module, wherein the second signal instruction comprises a signal threshold, and the signal threshold is configured to determine a second photovoltaic device which is located at the same photovoltaic string as a corresponding first photovoltaic device and the grouping information of the second photovoltaic device.

19. The method of claim 18, further comprising: determining a second photovoltaic device based on a signal characteristic of the first response signal and a corresponding signal threshold.

20. The method of claim 16, further comprising:
the plurality of photovoltaic devices receiving a third signal instruction sent by the management module; and
a second photovoltaic device in response to the third signal instruction sending a third response signal to the management module, wherein the third response signal comprises either or both of the grouping information and identification information of the second photovoltaic device.

21. The method of claim 17, wherein the first signal instruction comprises a state acquiring instruction which comprises identification information of a photovoltaic device, the photovoltaic device corresponding to the identification information sends the first response signal, the device information of the corresponding photovoltaic device comprises a status identifier of the corresponding photovoltaic device, and the status identifier is configured to identify whether the corresponding photovoltaic device is a second photovoltaic device.

22. The method of claim 17, wherein the first signal instruction comprises a search instruction for the first photovoltaic device, a photovoltaic device that successfully responds to the search instruction for the first photovoltaic device sends the first response signal, and the device information of the corresponding photovoltaic device comprises identification information of the corresponding photovoltaic device.

23. The method of claim 18, wherein the grouping information is determined by the second photovoltaic device according to a signal characteristic of the first response signal and a corresponding signal threshold.

24. The method of claim 23, wherein the signal characteristic of the first response signal comprises at least one of signal amplitude, signal impedance, or signal attenuation.

25. The method of claim 24, wherein the grouping information is determined by the second photovoltaic device according to a maximum difference in an order of differences between signal amplitudes of first response signals and corresponding signal thresholds.

26. The method of claim 18, further comprising: when the second photovoltaic device receives the second signal instruction and determines that identification information of a photovoltaic device carried in the received first response signal is consistent with identification information of a photovoltaic device carried in the second signal instruction, generating the grouping information.

27. The method of claim 18, wherein when the second photovoltaic device does not receive the first signal instruction and receives a plurality of second signal instructions, the grouping information is determined by the second photovoltaic device according to signal characteristics of the plurality of second signal instructions and corresponding signal thresholds.

28. The method of claim 20, wherein the third signal instruction comprises a reporting instruction for the grouping information, the reporting instruction for the grouping information comprises identification information of a specified second photovoltaic device to instruct the specified second photovoltaic device to report the grouping information thereof.

29. The method of claim 20, wherein the third signal instruction comprises a search instruction for the second photovoltaic device, and a second photovoltaic device that successfully responds to the search instruction for the second photovoltaic device reports either or both of the grouping information thereof and the identification information thereof.

30. A photovoltaic device, applied to a photovoltaic system, the photovoltaic system comprising a plurality of photovoltaic strings and a management module, and each of the plurality of photovoltaic strings comprising a plurality of photovoltaic devices connected in series and a plurality of photovoltaic modules connected to the plurality of photovoltaic devices respectively, **characterized in that** the photovoltaic device comprises a second determining module and a third determining module;
the second determining module is configured for communication between the photovoltaic device and the management module, to determine a first photovoltaic device among the plurality of photovoltaic devices in each of the plurality of photovoltaic strings, and the first photovoltaic device is configured for determining a second photovoltaic device which is located at the same photovoltaic string as the first photovoltaic device; and
the third determining module is configured for determining grouping information of the second photovoltaic device according to a response signal, which is sent by the first photovoltaic device during a process of the first photovoltaic device communicating with the management module, wherein the grouping information is configured for grouping the plurality of photovoltaic devices.

31. A photovoltaic system, **characterized by** comprising a plurality of photovoltaic strings and the management module of claim 15, wherein each of the plurality of photovoltaic strings comprises a plurality of photovoltaic devices of claim 30 and a plurality of photovoltaic modules connected to the plurality of photovoltaic devices respectively.

32. A computer-readable storage medium, storing a computer program, **characterized in that** the computer program is executed by a processor to perform the method of claims 1 to 14 or the method of claims 16 to 29.
